# EUROPEAN PATENT SPECIFICATION

(11) **EP 1 061 010 B1**
(45) Date of publication and mention of the grant of the patent: **06.05.2004**
(21) Application number: 00102230.0
(22) Date of filing: 11.02.2000
(51) Int. Cl.: B65F 1/14

(54) **System for differentiated waste collection**
System zum Sammeln von nach Art getrenntem Müll
Système de collecte différentiée d'ordures

(30) Priority: 16.06.1999 IT BO990327
(43) Date of publication of application: 20.12.2000
(73) Proprietor: Ecogest S.r.l., 62019 Recanati (Macerata) (IT)
(72) Inventor: Prosperi, Paolo, 62019 Recanati (Macerata) (IT); Curzietti, Tonino, 60019 Senigallia (Ancona) (IT)
(74) Representative: Dall'Olio, Giancarlo

(56) References cited:
- WO-A-96/22238
- DE-U- 9 307 149
- DE-U- 29 520 262
- DE-U- 29 708 136

## Description

The present invention relates to collection of urban solid wastes, with particular attention to separately storing them.

More precisely, the present invention relates to a system for sorting and storing wastes in containers embedded in the ground, each container being capable of receiving, when selected, a specific kind of waste, e.g. paper, glass, plastic, etc., and/or usual waste produced by every citizen due to personal consumption.

Recently, the differentiated waste collection has been constantly encouraged because of increasing amount of waste each administration must dispose of.

In fact, if people takes care of separately store the waste, which allows to recycle and reuse various materials, such as paper, glass, plastic, etc. after specific processing, this results in economic advantages and bigger natural resources protection.

For these main purposes, containers for separate kinds of waste have been situated in those areas which are considered appropriate.

Therefore, once people have separated the various kind of waste, they are also supposed to store them separately. This means that they must find containers for different kinds of waste being collected, which are not always situated in the same collection area.

Thus, the care of separately collecting the waste is not always followed by effective possibility of a differentiated disposal thereof.

Various attempts to resolve this problem have been made, such as the one described in WO-A-92/01615. This publication discloses a platform, which supports a plurality of angularly equispaced containers for separately collecting waste.

Another solution is the one described in document WO-A-92/22238, concerning to a system for separately collecting waste. The system includes a plurality of collecting units, with each unit including a series of containers situated inside seats made in the ground.

For instance, the Italian application No. BO98A 000948 of the same Applicant, describes a system for differentiated waste collection, including a plurality of lateral seats, embedded in the ground.

The seats are closed at top and communicate with one another while facing a central seat, whose upper part is open.

The lateral seats house the containers for different kinds of waste, which are each time located, by moving means cooperating with support and guide means, in the region of the central seat to receive the relative kind of waste.

An object of the present invention is to propose a system for differentiated waste collection in containers, which are housed by seats embedded in the ground and which are communicating with one another and arranged in such a way that containers for different types of waste are located in the same area.

Another object of the present invention is to propose a system, which allows an operator to move, from outside and by suitable means, a selected container, so as to place it in a predetermined position, below the waste discharge mouth and in the region of lifting means.

A further object of the present invention is to propose a system, realized by a simple technical solution, extremely reliable and practical, which optimizes and encourages a differentiated waste collection procedure.

The above mentioned objects are obtained in accordance with the contents of the claims.

The characteristic features of the invention will be pointed out in the following description of a preferred embodiment, which is not the only possible one, with reference to the accompanying drawings, in which:

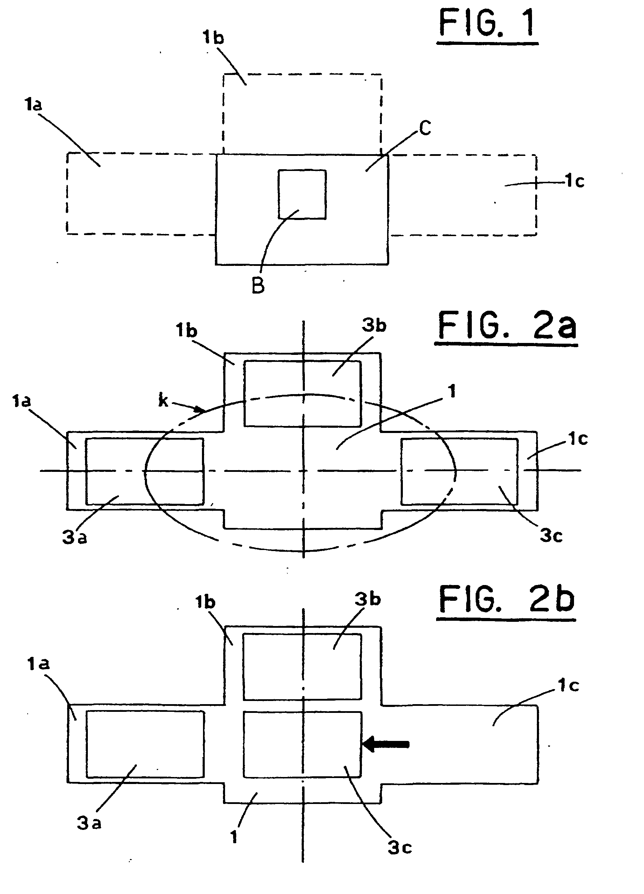

- Figure 1 is a schematic view from the top, of the ground area in which the seats housing the containers and means for moving them, are embedded;
- Figure 2a is a schematic view of the arrangement of the embedded seats containing the respective containers and the embedded central free seat, ready to receive the selected container when the waste is to be discharged;
- Figure 2b is a schematic view showing the movement procedure of a container to the central embedded seat;

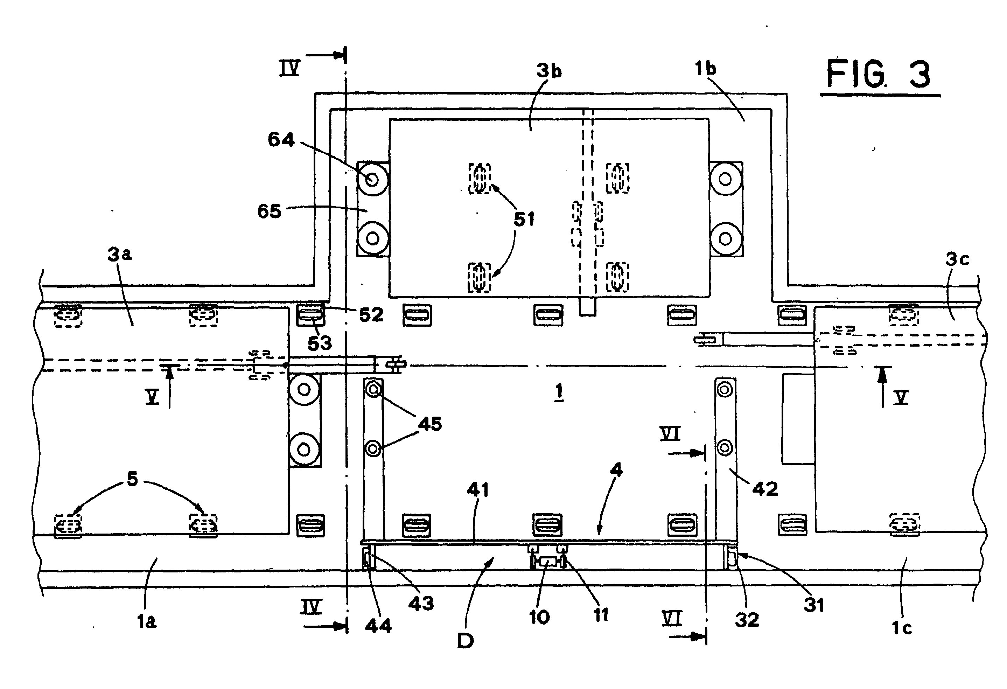

- Figure 3 is a schematic view from the top of the area indicated with k in Figure 2a, containing all the important elements of the proposed system, connected with a device for lifting the containers;
- Figure 4 is a schematic section view taken along the line IV-IV of Figure 3a;

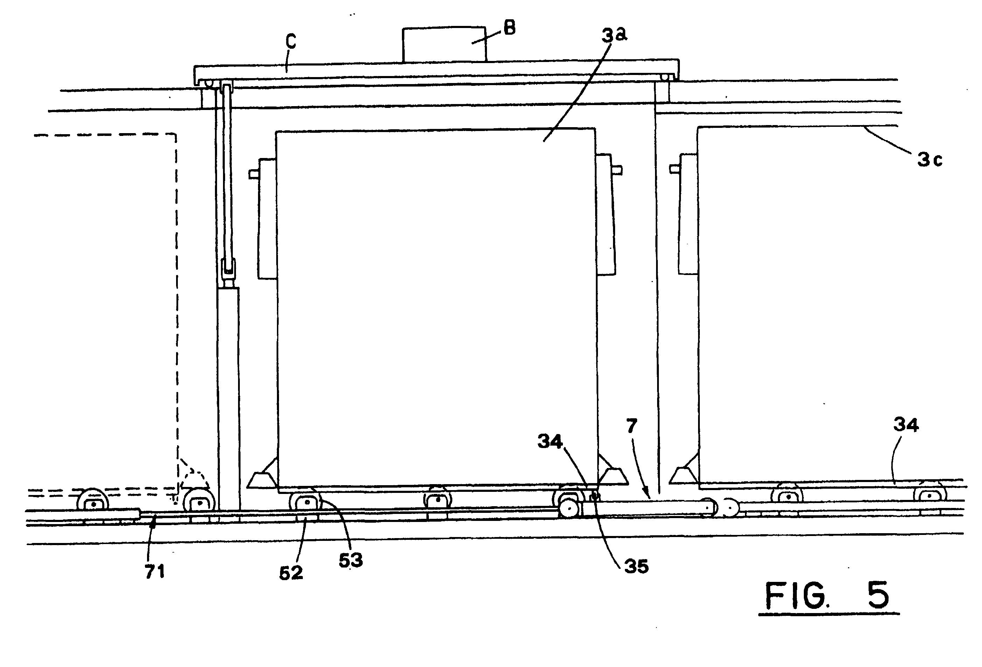

- Figure 5 is a schematic section view taken along the line V-V of Figure 3a;
- Figure 6 is a schematic lateral view of particularly important elements of the proposed system, as they appear in a particular working step, during which a container is moved;
- Figure 7 is a schematic plan view of important elements of the proposed system;

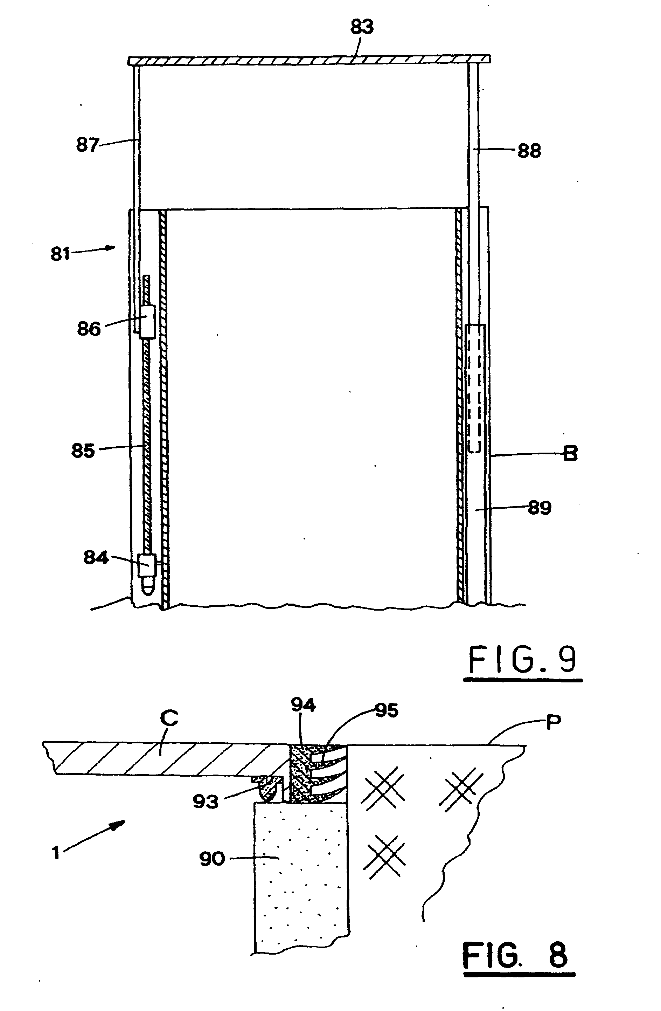

- Figure 8 is a schematic, very enlarged view of the particular indicated with G in Figure 4;
- Figure 9 is a schematic front sectional view of the waste discharge mouth;

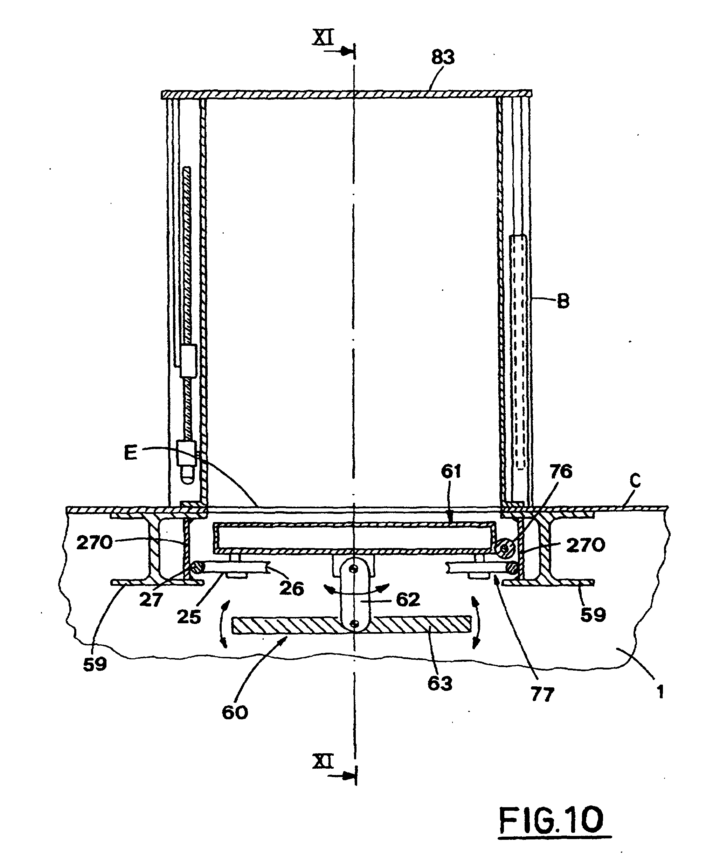

- Figure 10 is a schematic side sectional and partially broken away view of characteristic elements connected with the proposed device;
- Figure 11 is an extremely schematic sectional view, taken along line XI-XI of Figure 10, of the above mentioned elements, as they appear in different working steps.

With reference to the above described figures, reference numeral 1 indicates a central seat embedded in the ground and closed with a cover C communicating with the outside by a waste discharge mouth B.

The central seat 1 faces other embedded seats, which are located all around, so that they surround the central seat. These seats are closed at top and there are three of them, arranged in clockwise direction first 1a, second 1b and third 1c, respectively, as shown e.g. in Figures from 1 to 2b. The central seat communicates with all the other seats.

Each embedded seat, first 1a, second 1b, third 1c houses a corresponding container, respectively first 3a, second 3b, third 3c, adapted for collecting a particular type of waste.

Each container, first 3a, second 3b, third 3c is supported by a rectangular platform 34, whose dimensions are similar to the dimensions of the container base.

A unit 81 for lifting closing door 83 of the waste discharge mouth B is connected thereto.

The lifting unit 81 includes at least one actuator means 84, e.g. a gear motor, which drives into rotation a worm screw 85 arranged vertically closed to a side of the mouth B.

The worm screw 85 is coupled with a corresponding internally threaded bush 86 supporting one end of a first vertical rod 87.

The other end of the first vertical rod 87 is fastened directly to the inner surface of the closing door 83.

The lifting unit 81 includes further vertical rods 88, preferably in number of four, arranged at the corners of a rectangular. One end of each vertical rod 88 is slidably introduced into one of tubular columns 89, which are connected to the side of the mouth B.

The other end of each vertical rod 88 is fastened to the inner surface of the door 83.

The lifting unit 81 lifts the door 83, keeping it parallel with respect to the upper aperture of the mouth B, by a distance which allows to introduce only waste of normal dimension and prevents from introducing too bulky waste, which could remain blocked inside the mouth B.

The above mentioned cover C is equipped with a first seal 93, which is of the type described in the Patent Application No. BO98A 000357 of the same Applicant. The first seal 93 is placed between the walls 90 of the central embedded seat 1 and the inner surface of the cover.

A second seal 94 is also placed along the border of the cover C, this second seal being formed by a plurality of lips 95 which guarantee perfect sealing between outer edges of the cover C and the surface of the surrounding pavement P.

The above mentioned first seal 93 and second seal 94 allow not only to avoid emission of bad smell, but also to maintain the cover C perfectly coplanar with the surface of the surrounding pavement P.

A device D, situated in the above mentioned central seat 1, lifts any of the previously mentioned three containers.

The device D is realized e.g. according to the one described in the Patent Application BO99A 000328 (filed the same day as the application whose priority is claimed by this European application) by the same Applicant.

The lifting device D includes a lifting system for each container 3a, 3b, 3c. Each lifting system includes a lifting working unit 10 equipped with relative kinematic means 11 which lift a frame 4.

The frame 4 includes a cross member 41, fastened to the above mentioned cinematic means 11, and two cantilevered arms 42.

At its ends, the cross member 41 features plates 43, to which rollers 44 are rotatably fastened.

The rollers 44 rotate inside a groove 32 made in the vertical guides 31.

The cantilevered arms 42 feature a plurality of engaging means 45 provided for engagement with complementary seats 64 made in flanges 65. The flanges 65 are made integral with two parallel sides of each container 3a, 3b, 3c.

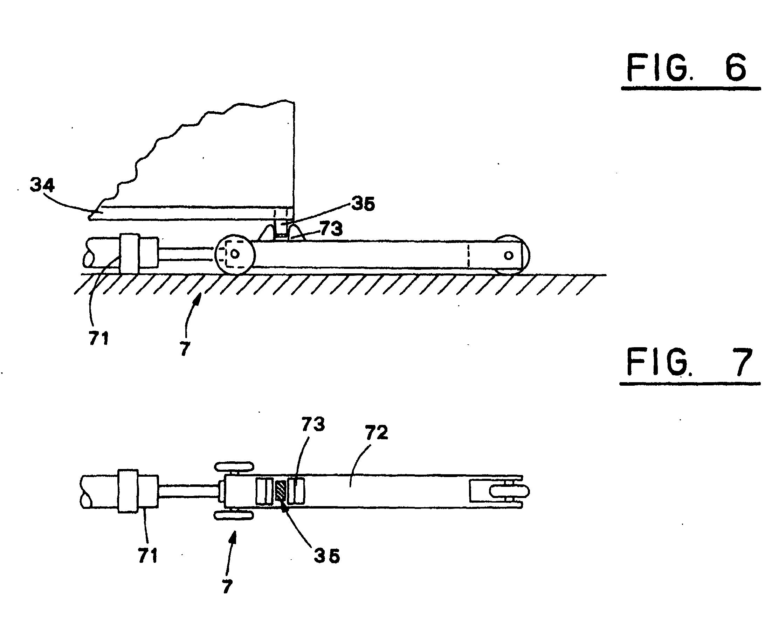

The lower surface of each of the above mentioned platforms 34 is equipped with a linking element 35, which is in form of a stud, e.g. as shown in Figures 6 and 7.

The platforms 34, connected with the containers 3a and 3c, have these studs in the region of the smaller side, which is turned toward the central seat 1, while the platform 34 connected to the container 3b has its stud placed in the region of the bigger side, which is also turned toward the central seat 1.

Each of the lateral seats 1a, 1b, 1c houses corresponding driving units 7, e.g. hydraulic pushing means 71.

The hydraulic pushing means 71 are arranged in such a way that their working direction is toward the central seat 1.

In particular, the hydraulic pushing means 71 of the first and third lateral seats 1a and 1c are arranged parallel to the bigger sides of the seats, while the hydraulic pushing means 71 of the second lateral seat 1b are arranged parallel to the smaller sides of the seat.

The hydraulic pushing means 71 feature fastened thereto, wheeled elements 72 equipped with housings 73, into which the above mentioned studs can be introduced and fixed.

The coupling between the studs and the wheeled elements allows to link the hydraulic pushing means 71 with the platform-container assemblies. This link condition allows to move the containers from the lateral seats to the central seat and vice versa.

For this purpose the bottom of the lateral seats 1a, 1b, 1c and of the central seat 1 feature guiding means 5, 51.

The guiding means 5, 51 define motion-controlled ways for the containers 3a and 3c from the respective seats 1a and 1c to the central seat 1 and vice versa.

The first guiding means 5 include a plurality of pairs of first wheels 53 fixed to first supports 52 made in the bottom of the central seat 1 and of the lateral seats 1a and 1c. The supports 52 are located along directions parallel to the longer sides of the lateral seats 1a, 1c.

The wheels 53 of each pair are spaced out in such a way as to engage with corresponding guideways 54 having complementary profile.

The guideways 54 are fastened to the lower side of the platforms 34, connected to the containers 3a and 3b, and extend parallel to the longer sides of the platforms.

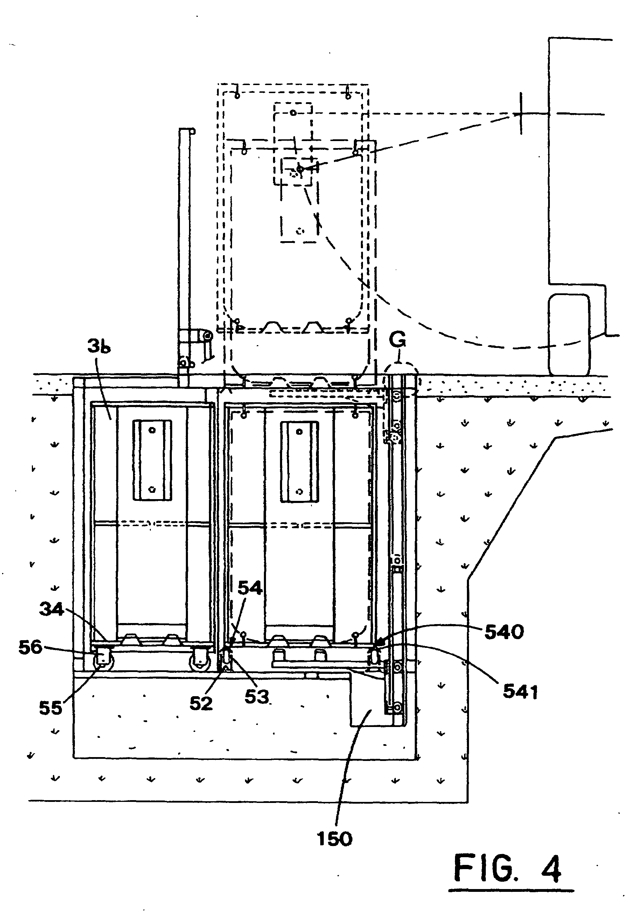

The guideways 54 include, e.g. as shown in Figure 4, section bars 540, whose shape allows to receive the wheels 53, which slide within respective wings 541.

The second guiding means 51 allow movements of the container 3b from the relative seat 1b to the central seat 1 and vice versa.

The second guiding means 51 include second wheels 55 carried by second supports 56 which are fastened to the base of the platform 34 of the container 3b and arranged in a line parallel to the shorter sides of the container.

At least two I-beams 59 can be provided under the cover C as strengthening elements.

The I-beams 59 are arranged parallel to the longer sides of the cover C and in such a way as give its shape to the profile of two corresponding opposite sides of the lower aperture E of the mouth B.

The two I-beams 59 support also a leveling system 60, which slides parallel and inside with respect to the heads of the I-beams 59.

The leveling system 60 is aimed at avoiding a disorderly pyramidal accumulation of waste in the container 3a, 3b, 3c each time situated in the central seat 1.

The leveling system 60 includes a base 61, whose dimensions are comparable with those of the lower aperture E of the mouth B.

A scraping bar 63 is fastened to the lower surface of the base 61 by means of a fork 62, so that it can swing.

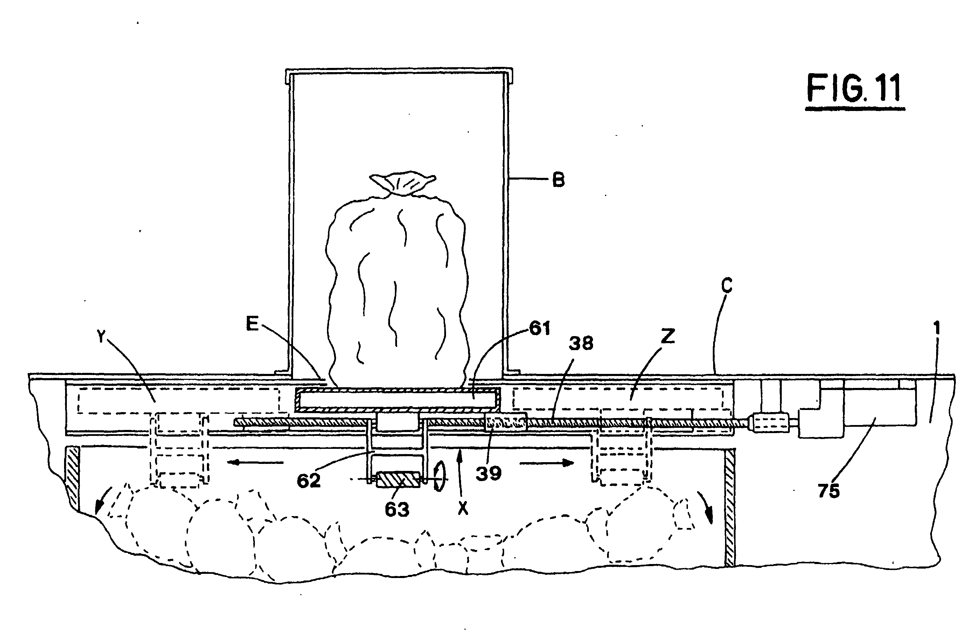

An actuator 75 is fastened to the lower surface of the cover C, by driving means 76, which co-operate with guiding elements 77 for driving the base 61 between three different working positions: first working position X, in which the base covers the lower aperture E of the mouth B, second position Y and third position Z, exactly opposite to the second one. In the second and third positions the aperture E is left free by the base (Figure 11).

The guiding elements 77 include grooved wheels 25, which are rotatably fastened to the bottom of the base 61, so that the rotation axis of the wheels 25 is perpendicular with respect to the base 61.

The wheels 25 have each one a groove 26 for engaging corresponding rods 27 having complementary profile. The rods 27 are fastened to uprights 270 fixed between the inner faces of the I-beams 59.

The above mentioned driving means 76 include a lead nut 39, fastened to the base 61, which couples with a screw shaft 38, which is driven by the actuator 75.

The group including the I-beams 59, the uprights 270, the rods 27 and the wheels 25 forms a kind of guiding track which supports and translated the base 61.

A loading cell (not shown) can be connected to the base 61 to measure the weight of the waste before it falls and is collected in the container situated below.

Moreover, a sensor for detecting smoke (not shown) can be situated inside the mouth B.

When a person disposes of his waste, he selects the related platform-container in accordance with the kind of waste and by means of a push button, switch or a magnetic card. The platform-container activated is placed under the central seat 1, in the region of the mouth B.

The selection activates the driving unit 7 connected to the selected group: the hydraulic pushing means 71 move the relative container up to the central seat 1 by means of the co-operating action of the wheeled element and the platform.

The correct translation of the containers 3a and 3c is ensured by sliding of the guideways 54 connected thereto on the relative pairs of wheels 53, whereas the translation of the container 3b is ensured by sliding of the second wheels 55 directly on the bottom of the seats.

The correct positioning of the platform-container assembly in the central seat 1 is determined by suitable sensors, not shown in the enclosed figures, which stop the assembly under the waste discharge mouth B.

At this point the lifting unit 81 is operated.

The actuator 84 drives the worm screw 85 to rotate, the bush 86 translates upwards pulling the first vertical rod 87, which lifts the shutter 83.

The lifting of the shutter 83 is guided by contemporary sliding of the second vertical rods 88 inside the tubular columns 89.

At this point, the user can discharge his waste into the mouth B and the waste stops on the base 61, which is in the first working position X.

After the waste has been positioned on the base 61, the lifting unit 81 brings the shutter 83 back to the closing position, and the actuator 75 drives, in proper time relation, the leveling system 60 to translate until the base 61 reaches the second working position Y.

During this translation, the scraping bar 63 moves the waste, which can have been accumulated under the mouth B, toward the wall of the container, while the freeing of the lower aperture of the mouth B allows the previously introduced waste to fall into the container situated below.

When the base 61 has completed its translation, which is detected by suitable sensors or stops of the driving means 76, it is brought back to the position X, in which it is located under the lower aperture of the mouth B.

When a next portion of waste is introduced, the base 61 translates up to the third working position Y: the alternate translation of the base toward the opposite walls of the container allows to level the waste contained therein in a convenient and uniform way.

Moreover, the above mentioned stop position allows to locate the container in the region of, and over the means forming the lifting device D.

If it is necessary to empty the container, the operator who collects the waste, operates, from outside, the lifting device D.

The working means of the lifting device D are situated, as shown in Figure 4, in a recess 150 made lower than the bottom of the central seat 1 in order to prevent them, while in lowered position, from hindering the movement of the platform-container assembly.

The container, filled with the waste or emptied, can be placed back in the corresponding seat when another user wants to deposit a different kind of waste or when the operator collecting waste wants to empty another type of container.

In this case, before a corresponding working unit moves another container having been just chosen, the working unit connected to the previous container is operated to bring the latter back to the initial seat.

Afterwards, the chosen container will be moved from its seat to the central seat 1 in the above described way.

The proposed system allows to group, under the same part of ground, more containers into relative embedded seats, which facilitates and encourages differentiated waste collection.

Moreover, this system allows to move containers inside the seats embedded in the ground by few and simple operations and allows also to position the containers in the region of lifting means and to the waste discharge mouth.

Further, it is to be pointed out that the basic elements of the system for waste collection are few and simple to manufacture, which reduces the production costs.

It is understood that what above has been described as a mere, not limitative example, therefore possible structural variants remain protected by the present technical solution, as described above and claimed hereinafter.

## Claims

1. System for differentiated waste collection, **characterized in that** it includes:
a central seat (1), which is embedded in the ground with respect to a pavement surface (P) and whose upper part is open, said central seat (1) being equipped with a cover (C), which has a mouth (B) for waste discharge therein;
at least two lateral seats (1a,1b,1c) likewise embedded in the ground and with their upper parts closed, said lateral seats facing and communicating with the central seat (1);
at least two platforms (34), which receive and support as many containers (3a,3b,3c) for differentiated waste collection, each of said platforms (34) being movable to any of the above mentioned seats (1,1a,1b,1c) and equipped with linking elements (35), by which they couple with driving units (7), connected to the system, said driving units aimed at moving, in cooperation with guiding means (5,51), each group formed by one platform and one container from the relative seats (1a,1b,1c) to a predetermined position in the region of a lifting device (D) situated in said central seat (1) and vice versa.

2. System according to claim 1, **characterized in that** said driving units (7) include hydraulic pushing means (71), housed in each of said lateral seats (1a,1b,1c) and aimed at moving wheeled elements (72) from said lateral seats to said central seat (1), and vice versa, said wheeled elements (72) being equipped with housings (73), into which said linking elements (35) of said platforms (34) are introduced; the connection between the wheeld elements (72) and platforms (34) allowing translation of said groups formed by the platforms and the containers from said lateral seats (1a,1b,1c) to said central seat (1) and vice versa.

3. System according to claim 1, **characterized in that** said guiding means (5) include a plurality of pairs of wheels (53) carried by supports (52) fastened to the bottom of said central seat (1) and of said lateral seats (1a, 1b,1c), said wheels (53) of each pair being spaced out one from another in such a way as to engage with corresponding guideways (54) having complementary profile and fastened to the basis of at least one of the platforms (34); the coupling between the wheels (53) and guideways means (54) being aimed at guiding translation of at least one group formed by a platform and a container from one of said lateral seats (1a,1b,1c) to said central seat (1) and vice versa.

4. System according to claim 3, **characterized in that** said guideways (54) include pairs of section bars (540), whose shape allows to receive said wheels (53) sliding within respective wings (541).

5. System according to claim 1, **characterized in that** said guiding means (51) include second wheels (55) held by second supports (56), said second wheels (55) being aimed at sliding on the bottom of at least of said lateral seats (1a,1b,1c) and of said central seat (1), so as to move at least one of said groups formed by said platforms and containers from one of said lateral seats (1a,1b,1c) to said central seat (1) and vice versa.

6. System according to claim 1, **characterized in that** said lifting device (D) includes:
a lifting system for said container (3a,3b,3c) including a lifting working unit (10) equipped with relative cinematic means (11);
a frame (4) moved alternately by sliding means along vertical guides (31) and including a pair of arms (42), said arms (42) being equipped with a plurality of engaging means (45) which engage with complementary seats (64) made in flanges (65) made integral with two parallel sides of said container (3a,3b,3c).

7. System according to claim 1, **characterized in that** said lifting working unit (10) includes at least one pneumatic actuator, and **in that** said cinematic means (11) include at least one pair of pinions, which are rotatably supported by the top of said pneumatic actuator, and which engage with a related pair of chains.

8. System according to claim 6, **characterized in that** said frame (4) includes a cross member (41), fastened to said cinematic means (11) and supporting said two arms (42), said cross member (41) featuring plates (43) at its ends, with said sliding means supported by said plates (43), said sliding means including rollers (44) aimed at rotating inside a groove (32) made in said vertical guides (31).

9. System according to claim 1, **characterized in that** said lifting device (D) is situated in a recess (150) made lower than the bottom of said central seat (1).

10. System according to claim 1, **characterized in that** it includes:
a unit (81) for lifting a shutter (83) of the waste discharge mouth (B), said lifting unit (81) including an actuator (84), which drives a worm screw (85) arranged vertically closed to a side of said mouth (B);
a first vertical rod (87), which is coupled, on one end with said worm screw (85) and, on the other end, fastened to the inner surface of said shutter (83);
second vertical rods (88), which have one end slidably introduced into relative tubular columns (89) connected to the sides of said mouth (B), and another end fastened to the inner surface of the shutter (83).

11. System according to claim 1, **characterized in that** it includes sealing device between said cover (C) and said embedded seat (S) and pavement surface (P), said sealing device including a first seal (93) between said cover (C) and the walls (90) of said central seat (1), and a second seal (94) equipped with a plurality of lips (95) which ensure perfect sealing between outer edges of said cover (C) and pavement surface (P).

12. System according to claim 1, **characterized in that** it includes at least two I-beams (59), situated under the cover (C), arranged parallel to the longer sides of the latter and in such a way as to give a shape to the profile of two corresponding opposite sides of the lower aperture (E) of said mouth (B), said two I-beams (59) supporting a leveling system (60), which slides parallel and inside with respect to the heads of said I-beams (59), said leveling system (60) being aimed at avoiding a disorderly pyramidal accumulation of waste in said container (3a,3b,3c) situated in said central seat (1);
said leveling system (60) including an actuator (75), fastened to the lower part of the cover (C), said actuator (75) acting on said leveling system (69) by driving means (76) cooperating with conveying elements (77), to drive said leveling system (60) between three different working positions:
first working position (X), in which the leveling system covers the lower aperture (E) of the mouth (B); and
second position (Y) and third position (Z), exactly opposite, in which the leveling system lets said aperture (E) free.

13. System according to claim 12, **characterized in that** said leveling system (60) includes a base (61), whose dimensions are comparable with those of the lower aperture (E) of said mouth (B) and which features a scraping bar (63) rotatably fastened thereto by a fork (62) in the region of the lower surface of the base (61), and **in that** said conveying elements (77) include wheels (25), which are rotatably fastened to the bottom of the base (61), so that the rotation axis of the wheels (25) is perpendicular with respect to the base (61), each one of said wheels (25) including a groove (26) for engagement with corresponding rods (27) having complementary profile, said rods (27) being fastened to uprights (270) situated between the inner facings of the I-beams (59); and **in that** said driving means (76) include a lead nut (39), fastened to the base (61), which engages with a screw shaft (38), which is driven by said actuator (75).

14. System according to claim 13, **characterized in that** a loading cell is connected to the base (61) to measure the weight of waste.

15. System, according to claim 1, **characterized in that** a sensor for detecting smoke is provided inside said mouth (B).

## Patentansprüche

1. System zur getrennten Abfallsammlung, **dadurch gekennzeichnet, daß** es folgendes umfaßt:
eine zentrale Aufnahme (1), die in Bezug auf eine Pflasteroberfläche (P) in den Boden eingelassen ist und deren oberer Teil offen ist, wobei die besagte zentrale Aufnahme (1) mit einer Abdeckung (C) versehen ist, die eine Mündung (B) für die Deponierung von Abfall darin aufweist;
wenigstens zwei seitliche Aufnahmen (1a, 1b, 1c), die gleichfalls in den Boden eingelassen sind und deren obere Bereiche geschlossen sind, wobei die besagten seitlichen Aufnahmen der zentralen Aufnahme (1) gegenüberliegend angeordnet und mit dieser verbunden sind;
wenigstens zwei Plattformen (34), die sämtliche für eine getrennte Abfallsammlung erforderlichen Behälter (3a, 3b, 3c) aufnehmen und tragen, wobei jede der besagten Plattformen (34) zu jeder der oben erwähnten Aufnahmen (1, 1a, 1b, 1c) hin beweglich und mit verbindungselementen (35) ausgerüstet ist, über die diese mit Antriebseinheiten (7) verbindbar sind und die an das System angeschlossen sind, wobei die besagten Antriebseinheiten dazu dienen, in zusammenwirken mit Führungsmitteln (5, 51) jede Gruppe, die durch eine Plattform und einen Behälter gebildet wird, von den zugeordneten Aufnahmen (1a, 1b, 1c) auf eine vorbestimmte Position im Bereich einer Hubvorrichtung (D), die in der besagten zentralen Aufnahme (1) angeordnet ist, und zurück zu verfahren.

2. System gemäß Anspruch 1, **dadurch gekennzeichnet, daß** die besagten Antriebseinheiten (7) hydraulische Schubmittel (71) aufweisen, die in jeder der besagten seitlichen Aufnahmen (1a, 1b, 1c) angeordnet sind und die dazu dienen, mit Rädern versehene Elemente (72) von den besagten seitlichen Aufnahmen zu der besagten zentralen Aufnahme (1) und zurück zu verfahren, wobei die besagten mit Rädern versehenen Elemente (72) mit Gehäusen (73) ausgerüstet sind, in die die besagten Verbindungselemente (35) der besagten Plattformen (34) eingeführt sind; wobei die verbindung zwischen den mit Rädern versehenen Elementen (72) und den Plattformen (34) die Überführung der besagten aus den Plattformen und den Behältern bestehenden Gruppen von den besagten seitlichen Aufnahmen (1a, 1b, 1c) zu der besagten zentralen Aufnahme (1) und zurück ermöglicht.

3. System gemäß Anspruch 1, **dadurch gekennzeichnet, daß** die besagten Führungsmittel (5) eine Anzahl von Räderpaaren (53) aufweisen, die von Halterungen (52) getragen werden, die an den Böden der besagten zentralen Aufnahme (1) und der besagten seitlichen Aufnahmen (1a, 1b, 1c) befestigt sind, wobei die besagten Räder (53) jedes Paares derart voneinander beabstandet sind, daß sie mit entsprechenden Führungsschienen (54) in Eingriff stehen, die ein entsprechendes Profil aufweisen, und an der Grundplatte wenigstens einer der Plattformen (34) befestigt sind; wobei die Kopplung zwischen den Rädern (53) und den Führungsschienen (54) der Überführung wenigstens einer aus einer Plattform und einem Behältern bestehenden Gruppe von einer der besagten seitlichen Aufnahmen (1a, 1b, 1c) zu der besagten zentralen Aufnahme (1) und zurück dient.

4. System gemäß Anspruch 3, **dadurch gekennzeichnet, daß** die besagten Führungsschienen (54) Paare von Abschnittstäben (540) umfassen, deren Form die Aufnahme der besagten Räder (53) ermöglicht, die in zugeordneten Flügeln (541) gleiten.

5. System gemäß Anspruch 1, **dadurch gekennzeichnet, daß** die besagten Führungsmittel (51) zweite Räder (55) umfassen, die an zweiten Aufnahmen (56) gehaltert sind, wobei die besagten zweiten Räder (55) dazu dienen, derart auf dem Boden wenigstens der besagten seitlichen Aufnahmen (1a, 1b, 1c) und der besagten zentralen Aufnahme (1) zu gleiten, daß wenigstens eine der besagten, aus den besagten Plattformen und Behältern bestehenden Gruppen von einer der besagten seitlichen Aufnahmen (1a, 1b, 1c) zu der besagten zentralen Aufnahme (1) und zurück überführt wird.

6. System gemäß Anspruch 1, **dadurch gekennzeichnet, daß** die besagte Hubvorrichtung (D) folgendes umfaßt:
ein Hubsystem für die besagten Behälter (3a, 3b, 3c) einschließlich einer Hubeinheit (10), die mit zugeordneten kinematischen Mitteln (11) ausgerüstet ist;
einen Rahmen (4), der über Gleitmittel abwechselnd entlang von vertikalen Führungen (31) bewegt wird und der ein Paar von Armen (42) umfaßt, wobei die besagten Arme (42) mit einer Anzahl von Verbindungsmitteln (45) ausgerüstet sind, die in Eingriff mit entsprechenden Aufnahmen (64) bringbar sind, die in Flanschen (65) angeordnet sind, die integral mit zwei parallelen Flächen der besagten Behälter (3a, 3b, 3c) ausgebildet sind.

7. System gemäß Anspruch 1, **dadurch gekennzeichnet, daß** die besagte Hubarbeitseinheit (10) wenigstens einen pneumatischen Stellantrieb aufweist, und dadurch, daß die besagten kinematischen Mittel (11) wenigstens ein Paar Zahnräder umfassen, die drehbar an der Oberseite des besagten pneumatischen Stellantriebes gehaltert sind und die mit einem zugeordneten Paar von Ketten in Eingriff bringbar sind.

8. System gemäß Anspruch 6, **dadurch gekennzeichnet, daß** der besagte Rahmen (4) eine Traverse (41) umfaßt, die an den besagten kinematischen Mitteln (11) angeordnet ist und die die besagten zwei Arme (42) unterstützt, wobei die besagte Traverse (41) an ihren Enden Platten (43) aufweist, wobei die besagten Gleitmittel durch die besagten Platten (43) gestützt werden, wobei die besagten Gleitmittel Rollen (44) aufweisen, die sich in einer Nut (32) drehen können, die in den besagten vertikalen Führungen (31) angeordnet sind.

9. System gemäß Anspruch 1, **dadurch gekennzeichnet, daß** die besagte Hubvorrichtung (D) in einer Aussparung (150) angeordnet ist, die niedriger als der Boden der besagten zentralen Aufnahme (1) angebracht ist.

10. System gemäß Anspruch 1, **dadurch gekennzeichnet, daß** es folgendes umfaßt:
eine Einheit (81) zum Anheben eines Verschlusses (83) für Abfalleinfüllöffnung (B), wobei die besagte Anhebeeinheit (81) einen Stellantrieb (84) aufweist, der eine Spindel (85) antreibt, die in vertikaler Richtung in der Nähe einer Seite der besagten Öffnung oder Mündung (B) angeordnet ist;
eine erste vertikale Stange (87), die an einem Ende mit der besagten Spindel (85) verbunden ist und am anderen Ende an der Innenfläche des besagten Verschlusses (83) befestigt ist;
zweite vertikale Stangen (88), bei denen das eine Ende verschieblich in zugeordneten röhrenförmigen Säulen (89) angeordnet sind, die mit den Seiten der besagten Mündung (B) verbunden sind, und deren anderes Ende an der Innenfläche des Verschlusses (83) befestigt ist.

11. System gemäß Anspruch 1, **dadurch gekennzeichnet, daß** es zwischen der besagten Abdeckung (C) und der besagten eingebetteten Aufnahme (S) und der Pflasteroberfläche (P) eine Dichtvorrichtung aufweist, wobei die besagte Dichtvorrichtung eine erste Dichtung (93) zwischen der besagten Abdeckung (C) und den wänden (90) der besagten zentralen Aufnahme (1) und eine zweite Dichtung (94) aufweist, die mit einer Anzahl von Dichtlippen (95) ausgestattet ist, die eine vollständige Dichtwirkung zwischen den äußeren Rändern der besagten Abdeckung (C) und der Pflasteroberfläche (P) gewährleisten.

12. System gemäß Anspruch 1, **dadurch gekennzeichnet, daß** es wenigstens zwei I-Träger (59) umfaßt, die unter der Abdeckung (C) angeordnet und parallel zu den längeren Seiten der letzteren derart angeordnet sind, daß sie dem Profil von zwei einander gegenüberliegend angeordneten Seiten der unteren Öffnung (E) der besagten Mündung (B) eine Form geben, wobei die beiden besagten I-Träger (59) ein Ebenensystem (60) stützen, das parallel und in Bezug auf die Enden der besagten I-Träger (59) innen gleitet, wobei das besagte Ebenensystem (60) dazu dient, eine ungeordnete pyramidale Anhäufung von Abfall in dem besagten Behälter (3a, 3b, 3c), der in der besagten zentralen Aufnahme (1) angeordnet ist, zu vermeiden;
wobei das besagte Ebenensystem (60) einen Stellantrieb (75) aufweist, der am unteren Teil der Abdeckung (C) befestigt ist, wobei der besagte Stellantrieb (75) über Antriebsmittel (76), die mit Transportelementen (77) zusammenwirken, auf das besagte Ebenensystem (60) einwirkt, um das besagte Ebenensystem (60) zwischen drei unterschiedliche Arbeitspositionen zu verfahren:
einer ersten Arbeitsposition (X), in der das Ebenensystem die untere Öffnung (E) der Mündung (B) bedeckt; und einer zweiten Position (Y) und einer genau gegenüber liegenden dritten Position (Z), in der das Ebenensystem die besagte Öffnung (E) freigibt.

13. System gemäß Anspruch 12, **dadurch gekennzeichnet, daß** das besagte Ebenensystem (60) eine Basis (61) umfaßt, deren Maße derjenigen der unteren Öffnung (E) der besagten Mündung (B) entsprechen und die einen Abstreifer (63) aufweist, der an dieser über eine Gabel (62) drehbar im Bereich der unteren Fläche der Basis (61) gehaltert ist, und dadurch, daß die besagten Transportelemente (77) Räder (25) aufweisen, die derart drehbar am Boden der Basis (61) befestigt sind, daß die Drehachsen der Räder (25) senkrecht in Bezug auf die Basis (61) angeordnet ist, wobei jedes der besagten Räder (25) eine Nut (26) aufweist, die mit entsprechenden Stangen (27) in Eingriff bringbar ist, die ein entsprechendes Profil aufweisen, wobei die besagten Stangen (27) an den Senkrechten (270) befestigt sind, die zwischen den Innenflächen der I-Träger (59) angeordnet sind; und daß die besagten Antriebsmittel (76) eine Führungsnut (39) aufweisen, die an der Basis (61) befestigt ist und die mit einer Schraubenspindel (38) in Eingriff steht, die durch den besagten Stellantrieb (75) angetrieben wird.

14. System gemäß Anspruch 13, **dadurch gekennzeichnet, daß** an die Basis (61) eine Kraftmeßdose angeschlossen ist, um das Gewicht des Abfalls zu ermitteln.

15. System gemäß Anspruch 1, **dadurch gekennzeichnet, daß** innerhalb der besagten Mündung (B) ein Rauchmelder vorgesehen ist.

## Revendications

1. Système pour la collecte différenciée des déchets, **caractérisé en ce qu'**il comprend :
un siège central (1) qui est encastré dans le sol par rapport à une surface de trottoir (P) et dont la partie supérieure est ouverte, ledit siège central (1) étant équipé avec un couvercle (C) qui possède une bouche (B) pour l'évacuation des déchets à l'intérieur de celui-ci ;
au moins deux sièges latéraux (1a, 1b, 1c) également encastrés dans le sol et dont leurs parties supérieures sont fermées, lesdits sièges latéraux faisant face et communiquant avec le siège central (1) ;
au moins deux plateformes (34) qui reçoivent et supportent autant de conteneurs (3a, 3b, 3c) pour la collecte différenciée des déchets, chacune desdites plateformes (34) étant mobile par rapport à l'un quelconque des sièges mentionnés ci-dessus (1, 1a, 1b, 1c) et équipée avec des éléments de liaison (35), avec lesquels elles sont couplées à des unités d'entraînement (7), raccordées au système, lesdites unités d'entraînement ayant pour but de se déplacer, en coopération avec des moyens de guidage (5, 51), chaque groupe formé avec une plateforme et un conteneur à partir des sièges relatifs (1a, 1b, 1c) vers une position prédéterminée dans la région d'un dispositif de levage (D) situé dans ledit siège central (1) et vice versa.

2. Système selon la revendication 1, **caractérisé en ce que** lesdites unités d'entraînement (7) comprennent des moyens de poussée hydraulique (71) logés dans chacun desdits sièges latéraux (1a, 1b, 1c) et ayant pour but de déplacer des éléments à roues (72) à partir desdits sièges latéraux vers ledit siège central (1), et vice versa, lesdits éléments à roues (72) étant équipés avec des logements (73) dans lesquels lesdits éléments de liaison (35) desdites plateformes (34) sont introduits ; le raccordement entre les éléments à roues (72) et les plateformes (34) permettant la translation desdits groupes formés par les plateformes et les conteneurs à partir desdits sièges latéraux (1a, 1b, 1c) vers ledit siège central (1) et vice versa.

3. Système selon la revendication 1, **caractérisé en ce que** lesdits moyens de guidage (5) comprennent une pluralité de paires de roues (53) supportées par des supports (52) fixés au fond dudit siège central (1) et desdits sièges latéraux (1a, 1b, 1c), lesdites roues (53) de chaque paire étant espacées à des intervalles les unes des autres afin se mettre en prise avec des rails de guidage correspondants (54) ayant un profil complémentaire et fixés à la base d'au moins l'une des plateformes (34) ; le couplage entre les roues (53) et les moyens de rails de guidage (54) ayant pour but le guidage de la translation d'au moins un groupe formé par une plateforme et d'un conteneur de l'un desdits sièges latéraux (1a, 1b, 1c) vers ledit siège central (1) et vice versa.

4. Système selon la revendication 3, **caractérisé en ce que** lesdits rails de guidage (54) comprennent des paires de barres profilées (540) dont la forme permet de recevoir lesdits roues (53) qui coulissent dans les ailes (541) respectives.

5. Système selon la revendication 1, **caractérisé en ce que** lesdits moyens de guidage (51) comprennent des secondes roues (55) maintenues par des seconds supports (56), lesdites secondes roues (55) ayant pour but de coulisser au fond au moins desdits sièges latéraux (1a, 1b, 1c) et dudit siège central (1), afin de déplacer au moins l'un desdits groupes formés par lesdites plateformes et des conteneurs de l'un desdits sièges latéraux (1a, 1b, 1c) vers ledit siège central (1) et vice versa.

6. Système selon la revendication 1, **caractérisé en ce que** ledit dispositif de levage (D) comprend :
un système de levage pour ledit conteneur (3a, 3b, 3c) comprenant une unité de travail de levage (10) équipée avec des moyens cinématiques (11) relatifs ;
un châssis (4) déplacé de manière alternée par des moyens de coulisse le long des guides verticaux (31) et comprenant une paire de bras (42), lesdits bras (42) étant équipés avec une pluralité de moyens de mise en prise (45) qui se mettent en prise avec des sièges complémentaires (64) réalisés dans des rebords (65) venus de matière avec deux côtés parallèles dudit conteneur (3a, 3b, 3c).

7. Système selon la revendication 1, **caractérisé en ce que** ladite unité de travail de levage (10) comprend au moins un actionneur pneumatique, et **en ce que** lesdits moyens cinématiques (11) comprennent au moins une paire de pignons, qui est supportée par le sommet dudit actionneur pneumatique, et qui se met en prise avec une paire relative de chaînes.

8. Système selon la revendication 6, **caractérisé en ce que** ledit châssis (4) comprend un élément croisé (41), fixé auxdits moyens cinématiques (11) et supportant lesdits deux bras (42), ledit élément croisé (41) présentant des plaques (43) à ses extrémités, avec lesdits moyens de coulisse supportés par lesdites plaques (43), lesdits moyens de coulisse comprenant des rouleaux (44) ayant pour but de tourner à l'intérieur d'une rainure (32) réalisée dans lesdits guides verticaux (31).

9. Système selon la revendication 1, **caractérisé en ce que** ledit disposidf de levage (D) est situé dans un enfoncement (150) formé plus bas que le fond dudit siège central (1).

10. Système selon la revendication 1, **caractérisé en ce qu'**il comprend :
une unité (81) pour lever un obturateur (83) de la bouche d'évacuation des déchets (B), ladite unité de levage (81) comprenant un actionneur (84) qui entraîne une vis sans fin (85) agencée verticalement à proximité d'un côté de ladite bouche (B) ;
une première tige verticale (87), qui est couplée, au niveau d'une extrémité avec ladite vis sans fin (85) et au niveau de l'autre extrémité, fixée à la surface interne dudit obturateur (83) ;
des secondes tiges verticales (88), qui ont une extrémité introduite de manière coulissante dans des colonnes tubulaires (89) relatives raccordées aux côtés de ladite bouche (B), et une autre extrémité fixée à la surface interne de l'obturateur (83).

11. Système selon la revendication 1, **caractérisé en ce qu'**il comprend un dispositif d'étanchéité entre ledit couvercle (C) et ledit siège encastré (S) et la surface de revêtement (P), ledit dispositif d'étanchéité comprend un premier joint d'étanchéité (93) situé entre ledit couvercle (C) et les parois (90) dudit siège central (1), et un second joint d'étanchéité (94) équipé avec une pluralité de lèvres (95) qui garantit la parfaite étanchéité entre les bords externes dudit couvercle (C) et la surface du revêtement (P).

12. Système selon la revendication 1, **caractérisé en ce qu'**il comprend au moins deux poutres en I (59), situées au dessous du couvercle (C), agencées parallèlement aux plus longs côtés de ce dernier, et de sorte à donner une forme au profil des deux côtés opposés correspondants de la plus longue ouverture (E) de ladite bouche (B), lesdites deux poutres en I (59) supportant un système de mise à niveau (60), qui coulisse parallèlement et à l'intérieur par rapport aux têtes desdites poutres en I (59), ledit système de mise à niveau (60) ayant pour but d'éviter une accumulation de déchets pyramidale désordonnée dans ledit conteneur (3a, 3b, 3c) situé dans ledit siège central (1),
ledit système de mise à niveau (60) comprenant un actionneur (75), fixé à la partie inférieure du couvercle (C), ledit actionneur (75) agissant sur ledit système de mise à niveau (69) par des moyens d'entraînement (76) en coopérant avec des éléments de convoyeur (77) pour entraîner ledit système de mise à niveau (60) entre trois différentes positions de travail :
une première position de travail (X), dans laquelle le système de mise à niveau recouvre l'ouverture inférieure (E) de la bouche (B) ; et
une deuxième position (Y) et une troisième position (Z), exactement opposée, dans lesquelles le système de mise à niveau laisse ladite ouverture (E) libre.

13. Système selon la revendication 12, **caractérisé en ce que** ledit système de mise à niveau (60) comprend une base (61) dont les dimensions sont comparables à celles de l'ouverture inférieure (E) de ladite bouche (B) et qui présente une barre de raclage (63) fixée en rotation à celle-ci par une fourche (62) dans la région de la surface inférieure de la base (61), et **en ce que** lesdits moyens de convoyeur (77) comprennent des rouos (25), qui sont fixées en rotation au fond de la base (61), de sorte que l'axe de rotation des roues (25) est perpendiculaire par rapport à la base (61), chacune desdites roues (25) comprenant une rainure (26) pour la mise en prise avec les tiges correspondantes (27) ayant un profil complémentaire, lesdites tiges (27) étant fixées à des montants (270) situés entre les revêtements internes des poutres en 1 (59) ; et **en ce que** lesdits moyens d'entraînement (76) comprennent un écrou en plomb (39) fixé à la base (61) qui se met en prise avec un arbre à vis (38), qui est entraîné par ledit actionneur (75).

14. Système selon la revendication 13, **caractérisé en ce qu'**une cellule de chargement est raccordée à la base (61) pour mesurer le poids des déchets.

15. Système selon la revendication 1, **caractérisé en ce qu'**un capteur pour détecter la fumée est prévu à l'intérieur de ladite bouche (B).
